# EUROPÄISCHE PATENTSCHRIFT

(11) **EP 1 108 149 B1**
(45) Veröffentlichungstag und Bekanntmachung des Hinweises auf die Patenterteilung: **11.05.2005**
(21) Anmeldenummer: 99946069.4
(22) Anmeldetag: 26.08.1999
(51) Int. Cl.: F15C 1/08, F15C 5/00, B01J 19/00, G01N 15/14

(54) **MINIATURISIERTER FLUIDSTROMSCHALTER**
MINIATURIZED FLUID FLOW SWITCH
COMMUTATEUR DE FLUX MINIATURISE

(30) Priorität: 01.09.1998 DE 19839745
(43) Veröffentlichungstag der Anmeldung: 20.06.2001
(73) Patentinhaber: Clondiag Chip Technologies GmbH, 07743 Jena (DE)
(72) Erfinder: KÖHLER, Johann, Michael, D-07751 Golmsdorf (DE); SCHULZ, Torsten, D-07743 Jena (DE)
(74) Vertreter: Maiwald Patentanwalts GmbH
(86) Internationale Anmeldenummer: PCT/EP1999/006380
(87) Internationale Veröffentlichungsnummer: WO 2000/012903

(56) Entgegenhaltungen:
- EP-A- 0 745 682
- WO-A-97/47013
- WO-A-98/10267
- GB-A- 1 241 867
- US-A- 3 001 539
- US-A- 3 357 441
- US-A- 3 552 415
- BLANKENSTEIN, SCAMPAVIA, BRANEBJERG, LARSEN & RUZICKA: "Flow switch for analyte injection and cell/particle sorting" ANALYTICAL METHODS INSTRUMENTATION, SPECIAL ISSUE µTAS'96,1996, Seiten 82-84, XP000865501 in der Anmeldung erwähnt
- SHOJI S ET AL: "Microflow devices and systems" JOURNAL OF MICROMECHANICS AND MICROENGINEERING, DEC. 1994, UK, Bd. 4, Nr. 4, Seiten 157-171, XP000863761 ISSN: 0960-1317 in der Anmeldung erwähnt

## Beschreibung

Die Erfindung betrifft einen miniaturisierten Fluidstromschalter, der eine gerichtete Ablenkung und Ableitung eines fluidischen Probenstroms, der in einen fluidischen Trägerstrom injiziert wird, ermöglicht. Mit dem erfindungsgemäßen Fluidstromschalter lassen sich Probenflüsse schalten, Teilchen, Moleküle oder sonstige in einem Probenstrom suspendierte bzw. gelöste Substanzen nach vorgebbaren Merkmalen sortieren.

In G. Blankenstein, L. Scampavia, J. Branebjerg, U.D. Larsen; J. Ruzicka; Flow Switch for Analyte Injection and Cell/Particie Sorting in Analytical Methods Instrumentation, Special lssue µTas'96; (1996) 82-84 ist eine mikrosystemtechnische Vorrichtung beschrieben, die über zwei separate Trägerstromeinlässe, einen Probenstromeinlaß, einen alle Ströme aufnehmenden gemeinsamen Strömungsabschnitt und zwei Auslässe verfügt. Bei diesem Vorschlag wird über das Strömungsgeschwindigkeits-Verhältnis der beiden Trägerströme der Probenstrom in verschiedene Auslaßkanäle gelenkt. Die Durchflußgeschwindigkeiten in den beiden Trägerströmen sind dort über makroskopische Spritzenpumpen steuerbar. Es sind dort jedoch keine Mittel angegeben, wie die Verhältnisse der beiden Trägerstromgeschwindigkeiten zueinander feinstufig geregelt werden können.

Ein Überblick über die nach dem Stand der Technik gängigen Verfahren zur Herstellung von Ventilen, regelbaren Drosseln und Pumpen für die Mikrosystemtechnik ist in "S. Shoji, M. Esashi; Microflow devices and systems in J. Micromech. Microeng; 4 (1994) 157-171" angegeben. Fast allen bekannten Vorrichtungen ist gemein, daß sie beweglich Teile, wie Membranen oder Lippen, zur Beeinflussung des Fluidstroms benötigen. Bei elektromagnetischen oder pneumatischen Verfahren erweist sich zudem die Integration eines Transducers als problematisch. Bewegliche Teile weisen grundsätzlich den Nachteil einer höheren Alterungsgeschwindigkeit und einer größeren Störanfälligkeit auf.

Weiterhin sind einige wenige Verfahren und Vorrichtungen bekannt, die keine beweglichen Teile erfordern und zum Auflbau von Pumpen in Mikrosystemen verwendet werden können. Dazu zählen das elektrohydrodynamische Prinzip [A. Richter, H. Sandmaier; Electrohydrodynamic pumping and flow measurement in Proc. IEEE-MEMS Workshop, (1991) 99-104], [S. F. Bart, L. S. Tavrow, M. Mehrgany, J. H. Lang; Microfabricated electrohydrodynamic pumps in Sensors Actuators (1990) A21-A23 193-197] und die Elektroosmose [D. J. Harrison, K. Seiler, A. Manz, Z. Fan; Chemical analysis and electrophoresis systems integrated on glass and silicon chips; Digest of IEEE Solid State Sensor and Actuator Workshop; (1992) 1 1~113]. Diese Lösungsansätze sind allerdings nur sehr eingeschränkt zum Aufbau einer regelbaren Drossel oder eines Ventils verwendbar. Zudem benötigen diese Verfahren sehr spezielle Voraussetzungen an die zu pumpende oder zu regulierende Flüssigkeit. Die wichtigsten Voraussetzungen sind z.B. eine extrem geringe Eigenleitfähigkeit (in Falle der Elektrohydrodynamik) oder eine extrem hohe Eigenleitfähigkeit bzw. Ionenstärke (im Falle der Elektroosmose). Für auf dem Prinzip der Elektroosmose arbeitende Vorrichtungen gilt zudem die Beschränkung, daß die Funktionsfähigkeit der Vorrichtungen nur gewährleistet ist, wenn Kapillaren mit einem Durchmesser von kleiner als 50 µm eingesetzt werden.

Der Erfindung liegt die Aufgabe zugrunde, einen miniaturisierten Fluidstromschalter anzugeben, der keiner beweglichen Teile bedarf und bei dem keine beschränkenden Voraussetzungen, wie nach dem bekannten Stand der Technik, an die zum Einsatz gelangenden fluidischen Medien bestehen.

Die Aufgabe wird durch die kennzeichnenden Merkmale des ersten Patentanspruchs gelöst. Vorteilhafte Ausgestaltungen sind durch die nachgeordneten Ansprüche erfaßt.

Die vorliegende Erfindung zeichnet sich durch folgende technische Vorteile aus: Sie ist prädestiniert für die Integration in Mikrosysteme, sie kann mittels elektrischer Signale gesteuert und betrieben werden und sie weist keine beweglichen und damit störanfälligen Teile auf.

Das Prinzip des vorgeschlagenen Fluidstromschalters beruht auf der Viskositätsänderung einer Flüssigkeit mit Änderung ihrer Temperatur. Wird mittels eines elektrischen Widerstandsheizers die Flüssigkeit in vordefinierten Leitungsabschnitten erwärmt, so ändert sich damit ihr hydrodynamischer Widerstand. Bei der elektrokalorischen Fluidsteuerung werden elektrokalorische Drosseln zur Steuerung eines Trägerstroms, mit dem eine Probenflüssigkeit auf verschiedene Kanäle verteilt wird, eingesetzt. Im einfachsten Fall wird die Trägerflüssigkeit in einen Kanal gepumpt, der sich symmetrisch in zwei Kanäle aufteilt. In diese beiden Trägerstromkanälen ist jeweils ein Abschnitt mit einem gegenüber dem sonstigen Trägerstromkanalquerschnitt verjüngten Kanalquerschnitt vorgesehen, der mit einer regelbaren Heizeinrichtung versehen ist. Weiterhin sind genannte Trägerstromkanalabschnitte von den übrigen Baugruppen des Fluidstromschalters thermisch isoliert. Die Trägerstromkanäle münden zusammen mit einem Probenkanal in den Kopf einer Verteilerkammer. Die Verteilerkammer ist spiegelsymmetrisch zum Probenkanal ausgebildet. Am Ende der Verteilerkammer sind zumindest zwei Auslaßkanäle vorgesehen. Über eine Ansteuerung der vorgesehenen Heizeinrichtungen wird die Probenflüssigkeit gezielt in einen der vorgesehenen Auslaßkanäle injiziert.
Das Verhältnis der Durchflußgeschwindigkeiten der beiden Trägerströme am Einlaß der Verteilerkammer bestimmt dabei, in welchen der vorgesehenen Auslaßkanäle die Probenflüssigkeit gedrückt wird.

Die Erfindung soll nachstehend anhand schematischer Ausführungsbeispiele näher erläutert werden. Es zeigen:
- Fig. 1: eine grundsätzliche Ausführungsform eines miniaturisierten Fluidstromschalters mit den wesentlichen Funktionsbaugruppen in Draufsicht und
- Fig. 2: eine detailliertere Ausführungsform mit weiteren Funktionsbaugruppen in einer Explosionsdarstellung.

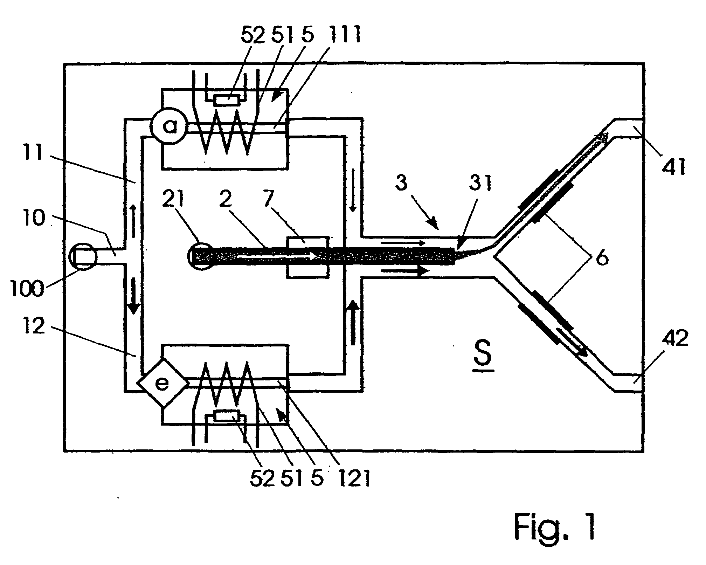

Figur 1 zeigt in Draufsicht ein Substrat S, in das ein Trägerstromkanal 10 eingebracht ist, der symmetrisch in zwei Trägerstromkanälen 11, 12 aufgeteilt ist, denen im Beispiel eine Breite von 0,5 mm und eine Tiefe von 50 µm gegeben ist. Innerhalb vorbestimmter Zonen sind die Trägerstromkanäle 11, 12 mit einem gegenüber dem sonstigen Trägerstromkanalquerschnitt verjüngten Trägerstromkanalquerschnitt 111, 121 versehen. Im Beispiel weisen diese verjüngten Querschnitte eine Breite von 10 µm und eine Tiefe von 5 µm auf. Weiterhin stehen diese Trägerstromteilabschnitte in einem engen thermischen Kontakt zu regelbaren Heizeinrichtungen 5, die vorzugsweise durch einen Dünnschichtheizwiderstand 51 und einen Temperatursensor 52 gebildet sind. Von den übrigen Baugruppen des Fluidstromschalters sind genannte Trägerstromteilabschnitte durch in Fig. 1 nicht näher dargestellte Mittel thermisch isoliert. Die Ausgänge genannter Trägerstromteilabschnitte verlaufen wieder in Trägerstromabschnitten mit einem unverjüngten Querschnitt und münden gemeinsam in eine Verteilerkammer 3, wobei sie einen ebenfalls in die Verteilerkammer 3 mündenden Probenstromkanal 2 symmetrisch umfassen. Im Beispiel ist dabei dem Probenstromkanal eine Breite vom 100 µm und eine den Trägerstromkanälen angepaßte Tiefe von 50 µm gegeben und er ist ebenso wie die Trägerstromkanäle in das Substrat S eingelassen. Im Kopf 31 der Verteilerkammer ist ein Abschnitt vorgesehen, in dem die beiden Trägerströme, die den Probenstrom umfassen, gemeinsam strömen. Am Ende der Verteilerkammer 3 schließen sich wenigstens zwei Auslaßkanäle 41, 42 an, die im Beispiel nach Fig. 1 mit Durchflußmessern 6 versehen sind, deren Ausgangssignale ebenfalls einer gemeinsamen Steuerung und Regelung der Heizeinrichtungen 5 zuführbar sind. Wird eine der Heizeinrichtungen 5 eingeschaltet und damit der Dünnschichtheizer 51 in Betrieb genommen, wie es in Fig. 1 schematisch durch ein von einem auf einer Ecke stehenden Quadrat umfaßten "e" angedeutet ist, so reduziert sich der hydrodynamische Widerstand im zugehörigen Trägerstromkanal 12. Der Anteil an Trägerstromflüssigkeit, der nun über diesen Kanalabschnitt fließt, wird gegenüber dem Anteil, der über den Trägerstromkanal 11 fließen kann, der im Beispiel nicht beheizt wird (vgl. Fig. 1, von einem Kreis umfaßtes "a"), steigen. Daher wird die in die Verteilerkammer 3 injizierte Probe in den Auslaßkanal 41 gedrückt. Wird umgekehrt die Heizeinrichtung 5 im Trägerstromkanal 11 eingeschaltet, fließt die Probe in den Auslaßkanal 42.

Es liegt im Rahmen der Erfindung, den Trägerstromkanal 10 in mehr als zwei Kanäle aufzuspalten, die auch unterschiedliche Kanalquerschnitte aufweisen können, wobei zumindest jedoch jeweils zwei symmetrisch einander zugehörigen Teilkanälen identische Querschnitte gegeben sind. Die daraus resultierenden Teilkanäle können alle mit einer der genannten regelbaren Heizeinrichtung 5 versehen sein, so daß in der Verteilerkammer 3 die Möglichkeit besteht, den Probenstrom äußerst präzise auszulenken. Dabei liegt es ebenfalls im Rahmen der Erfindung, am Ende der Verteilerkammer 3 mehr als nur zwei Auslaßkanäle vorzusehen. Ebenso können die Auslaßkanäle mit verjüngten Kanalabschnitten (analog zu den Abschnitten 111 und 121) und diesen zugeordneten Heizeinrichtungen 5 versehen sein (in Fig. 1 nicht dargestellt), wodurch sich die Ablenkwirkung in der Verteilerkammer 3 weiter verstärken und verfeinern läßt. Wenn im Beispiel nach Fig. 1 die Heizeinrichtung im Trägerstromkanal 12 und im Auslaßkanal 41 eine analoge Heizeinrichtung an einem zum Kanalabschnitt 121 analog ausgebildeten Kanalabschnitt eingeschaltet werden würde, ließe sich die Probenflüssigkeit noch definierter in den Auslaß 41 drücken.
Der miniaturisierte Fluidstromschalter kann auch zur Sortierung von Teilchen, Molekülen oder sonstigen in den Probenstrom suspendierten bzw. gelösten Substanzen verwendet werden. Dazu ist in den Probenkanal 2 ein Detektor 7 integriert oder vorgeschaltet. Wird ein Teilchen der Wahl detektiert, so wird durch Ansteuerung der jeweils vorgesehenen Heizeinrichtungen das Teilchen in den gewünschten Auslaß gedrückt. Dabei spielt es keine Rolle, nach welcher Eigenschaft, z.B. Größe, Farbe, Fluoreszenzspektrum, Dielektrizität, Leitfähigkeit, Radioaktivität, chemische Reaktivität usw., sortiert werden soll; es ist lediglich ein die genannten Größen detektierender Detektor 7 einzusetzen. Grundsätzlich kann der miniaturisierte Fluidstromschalter für alle Aufgaben eingesetzt werden, bei denen Probenströme auf Trägerströme verteilt werden sollen (Fluidmultiplexing). Wenn im Rahmen der Erfindung von fluidischen Medien gesprochen wird, sind darunter auch ausdrücklich Gase zu verstehen, die die Trägerströme und den Probenstrom bilden.

Die in Fig. 1 nicht näher dargestellte thermische Isolation der im verjüngten Kanalquerschnitt eingesetzten Heizeinrichtung von ihrer Umgebung und die Verwendung gut temperaturleitfähiger Materialien zur thermischen Ankopplung an den verjüngten Kanalquerschnitt dienen der Erhöhung die Arbeitsgeschwindigkeit.

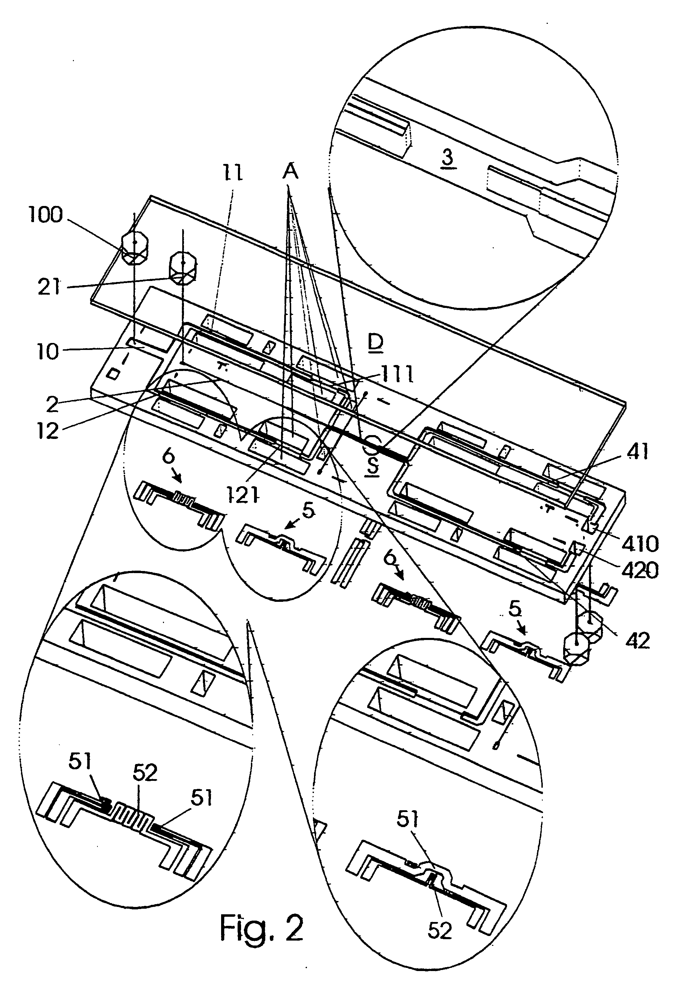

In Figur 2 soll ein mikrosystemtechnisches Ausführungsbeispiel eines miniaturisierten Fluidstromschalters detaillierter anhand einer Explosionsdarstellung erläutert werden. Der miniaturisierte Fluidstromschalter besteht in diesem Beispiel aus einem 15 mm · 60 mm großen Siliziumchip S, in den die Kanäle 10, 11, 12, 111, 121, 2, 41, 42, die Verteilerkammer 3 und thermische Isolationszonen, hier in Form von durchgehenden Ausnehmungen A, die durch anisotropes naßchemisches zweistufiges Tiefenätzen eingebracht sind. Die Kanäle 11, 12, 2, 41 und 42 weisen im Beispiel die in Fig. 1 genannten Dimensionen auf und sind in Fig. 2 ebenfalls nicht maßstäblich wiedergegeben. Die genannten Baugruppen sind im Beispiel mit einem 0,2 mm starken Pyrexglaswafer D abgedeckt, wobei der dichtende Verschluß zum Substrat S vorteilhaft durch anodisches Bonden erfolgt. Durch Tiefenätzen oder Ultraschallbohren o.ä. durch das Substrat S bzw. den Abdeckwafer D sind die Kanäle nach außen eröffnet, um Anschlußverbindungen 100, 21, 410, 420 für den jeweiligen Kanäle nach außen zu bilden. Für nicht näher dargestellte externe Anschlüsse der Kanäle sind Aluminiumanschlußstücke auf die gebildeten Öffnungen geklebt.
Auf die Unterseite des Siliziumchips S wurden Platin- und Aluminiumbeschichtungen aufgebracht, aus denen mittels gängiger mikrolithografischer Verfahren die Strukturen zur Bildung von Dünnschichtheizwiderständen 51 und Dünnschichttemperaturfühlern 52 hergestellt sind.
Den im Bereich der Heizeinrichtungen 5 liegenden verjüngten Kanalabschnitten 111, 121 sind die Dünnschichtheizwiderstände 51 mit einem Widerstand von ca. 10 Ω zugeordnet, welche mit maximal 36 W betrieben werden. Die Dünnschichttemperaturfühler 52 zur Regelung der Temperatur weisen einen Widerstand von ca. 2,2 kΩ und einen TK von 0,00198 K⁻¹ auf. Zur thermischen Isolation dieses Bereiches von den übrigen Baugruppen sind zumindest beidseitig der verjüngten Kanalquerschnitte 111, 121 im Siliziumsubstrat S Ausnehmungen A vorgesehen.

Beim Beispiel nach Fig. 2 teilt sich der Trägerstromkanal 10 wieder in zwei Kanäle 111, 121 auf. In jedem dieser Kanäle ist in weiterer Ausgestaltung zu Fig. 1 ein Durchflußmesser 6 vorgesehen, der den beschriebenen verjüngten Kanalquerschnitten vorgeordnet ist. Das Prinzip der eingesetzten und vorteilhafterweise in Dünnschichttechnik in einem Arbeitsgang wie der Strukturierung der Dünnschichtwiderstandsheizer 51 und Dünnschichttemperatursensoren 52 hergestellten Durchflußmesser beruht auf der Messung der Verzerrung des Temperaturprofils eines Heizers, dem symmetrisch zwei Temperaturfühler zugeordnet sind, bedingt durch die Wärmetransportwirkung der im Kanal strömenden Flüssigkeit.
Zur oben genannten weiteren Erhöhung der Feinfühligkeit der Auslenkung des Probenstroms im Kopf 31 der Verteilerkammer 3 sind in diesem Beispiel auch den beiden Auslaßkanälen 41, 42 jeweils ein Durchflußmesser 6 sowie ein verjüngter Kanalabschnitt mit zugehöriger Heizeinrichtung zugeordnet, deren Ausbildung analog zu den vorherbeschriebenen erfolgt.
Mit einem miniaturisierten Fluidstromschalter nach den beschriebenen Ausführungsbeispielen lassen sich problemlos Schaltgeschwindigkeiten von 5 Hz realisieren.
Bei vorliegender Erfindung können alle notwendigen Baugruppen problemlos auf einem Chip, insbesondere Silizimchip untergebracht werden. Der miniaturisierte Fluidstromschalter ist damit ein echtes vollständiges Mikrosystem. Zudem weist der Fluidstromschalter nach der Erfindung keine beweglichen Bauteile auf und ist somit extrem störunanfällig.

Alle in der Beschreibung, den nachfolgenden Ansprüchen und der Zeichnungen dargestellten Merkmale können sowohl einzeln als auch in beliebiger Kombination miteinander erfindungswesentlich sein.

### Bezugszeichenliste

- 10: - gemeinsamer Einlaß
- 100: - Trägerflüssigkeitszuführung
- 11, 12: - Trägerstromkanal
- 111, 121: - verjüngte Kanalquerschnitte
- 2: - Probenstromkanal
- 21: - Probenflüssigkeitszuführung
- 3: - Verteilerkammer
- 31: - Kopf der Verteilerkammer
- 41,42: - Auslaßkanäle
- 410,420: - Anschlußverbindungen
- 5: - Heizeinrichtung
- 51: - Dünnschichtheizwiderstand
- 52: - Temperatursensor
- 6: - Durchflußmesser
- A: - Ausnehmungen
- D: - Abdeckwafer
- S: - Substrat (Siliziumchip)
- a, e: - Schaltstellungen

## Patentansprüche

1. Miniaturisierter Fluidstromschalter zur gerichteten Ablenkung eines fluidischen Probenstroms, bestehend aus wenigstens zwei Trägerstromkanälen (11, 12) und einem Probenstromkanal (2), die zueinander in eine Verteilerkammer (3) münden, an die sich wenigstens zwei Auslaßkanäle (41, 42) anschließen, **dadurch gekennzeichnet, daß** die Trägerstromkanäle (11, 12) mit einem gemeinsamen Einlaß (10) verbunden sind und zumindest die Trägerstromkanäle (11, 12) jeweils in Teilabschnitten in engem thermischen Kontakt mit regelbaren Heizeinrichtungen (5) versehen sind, die von den übrigen Baugruppen thermisch isoliert angebracht sind und den Trägerstromkanälen (11, 12) im Bereich der Heizeinrichtungen (5) ein gegenüber dem sonstigen Trägerstromkanalquerschnitt ein verjüngter Kanalquerschnitt (111, 121) gegeben ist.

2. Miniaturisierter Fluidstromschalter nach Anspruch 1, **dadurch gekennzeichnet, daß** die Trägerstromkanäle (11, 12) den Probenstromkanal (2) zumindest in der Verteilerkammer (3) symmetrisch umfassen.

3. Miniaturisierter Fluidstromschalter nach Anspruch 1, **dadurch gekennzeichnet, daß** den Trägerstromkanälen (11, 12) ein identischer Strömungsquerschnitt gegeben ist.

4. Miniaturisierter Fluidstromschalter nach Anspruch 1, **dadurch gekennzeichnet, daß** alle genannten Kanäle (11, 12, 2, 41, 42) und die Verteilerkammer (3) in ein gemeinsames Substrat (S) eingebracht und von einem Abdeckwafer (D) verschlossen sind.

5. Miniaturisierter Fluidstromschalter nach Anspruch 1, **dadurch gekennzeichnet, daß** zusätzlich zu den Trägerstromkanälen (11, 12) die Auslaßkanäle in engem thermischen Kontakt mit regelbaren Heizeinrichtungen (5) versehen sind.

6. Miniaturisierter Fluidstromschalter nach Anspruch 1 und 5, **dadurch gekennzeichnet, daß** die regelbaren Heizeinrichtungen (5) durch einen Dünnschichtheizwiderstand (51) und einen -temperatursensor (52) gebildet sind.

7. Miniaturisierter Fluidstromschalter nach Anspruch 1, **dadurch gekennzeichnet, daß** die Trägerstromkanäle (11, 12) und/oder die Auslaßkanäle (41, 42) mit Durchflußmessern (6) versehen sind.

8. Miniaturisierter Fluidstromschalter nach Anspruch 7, **dadurch gekennzeichnet, daß** die Durchflußmesser durch einen elektrisch beheizbaren Dünnschichtheizer gebildet sind, dem symmetrisch in Kanaldurchströmungsrichtung zwei Temperaturfühler zugeordnet sind.

9. Miniaturisierter Fluidstromschalter nach den Ansprüch 6, 7, 8, **dadurch gekennzeichnet, daß** genannte Dünnschichtheizer und Temperaturfühler durch eine einheitliche Beschichtungstechnologie und einen einheitlichen Mikrostrukturierungsprozeß hergestellt sind.

10. Miniaturisierter Fluidstromschalter nach Anspruch 1, **dadurch gekennzeichnet, daß** dem Probenstromkanal (2) wenigstens ein Detektor (7) zur Detektion von Einzelteilchen im Probenstrom zugeordnet ist, dessen Ausgangssignale über geeignete Steuer- und Regeleinrichtungen den jeweils eingesetzten Heizeinrichtungen (5) zuführbar sind.

11. Miniaturisierter Fluidstromschalter nach Anspruch 1, **dadurch gekennzeichnet, daß** die thermische Isolation der regelbaren Heizeinrichtungen (5) von den übrigen Baugruppen durch beidseitig zu den verjüngten Kanalabschnitten (111, 121) in das Substrat (S) eingebrachte Ausnehmungen (A) erfolgt.

## Claims

1. A miniaturized fluid flow switch for directed deflection of a fluidic sample flow, comprising at least two carrier flow channels (11, 12) and a sample flow channel (2), which discharge toward one another into a distributor chamber (3), to which at least two outlet channels (41, 42) are connected, **characterized in that** the carrier flow channels (11, 12) are connected to a shared inlet (10) and at least the carrier flow channels (11, 12) are each provided in partial sections with close thermal contact with regulatable heating devices (5), which are attached so they are thermally insulated from the remaining assemblies, and the carrier flow channels (11, 12) are provided in the region of the heating devices (5) with a tapered channel cross section (111, 121) in relation to the remaining carrier flow channel cross-section.

2. The miniaturized fluid flow switch according to claim 1, **characterized in that** the carrier flow channels (11, 12) symmetrically enclose the sample flow channel (2) at least in the distributor chamber (3).

3. The miniaturized fluid flow switch according to claim 1, **characterized in that** the carrier flow channels (11, 12) are provided with an identical flow cross-section.

4. The miniaturized fluid flow switch according to claim 1, **characterized in that** all channels (11, 12, 2, 41, 42) cited and the distributor chamber (3) are introduced into a shared substrate (S) and closed by a cover wafer (D).

5. The miniaturized fluid flow switch according to claim 1, **characterized in that**, in addition to the carrier flow channels (11, 12), the outlet channels are provided in close thermal contact with regulatable heating devices (5).

6. The miniaturized fluid flow switch according to claims 1 and 5, **characterized in that** the regulatable heating devices (5) are formed by a thin-film heating resistor (51) and a thin-film temperature sensor (52).

7. The miniaturized fluid flow switch according to claim 1, **characterized in that** the carrier flow channels (11, 12) and/or the outlet channels (41, 42) are provided with flow meters (6).

8. The miniaturized fluid flow switch according to claim 7, **characterized in that** the flow meters are formed by an electrically heatable thin-film heater, to which two temperature sensors are assigned symmetrically in the channel flow direction.

9. The miniaturized fluid flow switch according to claims 6, 7, 8, **characterized in that** the thin-film heater and temperature sensor cited are manufactured through a uniform coating technology and a uniform micro-texturing process.

10. The miniaturized fluid flow switch according to claim 1, **characterized in that** at least one detector (7) is assigned to the sample flow channel (2) for detecting individual particles in the sample flow, whose output signals may be supplied to the particular heating device (5) used via suitable control and regulating devices.

11. The miniaturized fluid flow switch according to claim 1, **characterized in that** the regulatable heating devices (5) are thermally insulated from the remaining assemblies by recesses (A) introduced into the substrate (S) on both sides of the tapered channel sections (111, 121).

## Revendications

1. Commutateur de flux de fluide miniaturisé pour la déviation orientée d'un flux d'échantillon fluidique, comprenant au moins deux canaux du flux porteur (11, 12) et un canal du flux d'échantillon (2), qui débouchent ensemble dans une chambre de répartition (3), à laquelle se raccordent au moins deux canaux d'évacuation (41, 42), **caractérisé en ce que** les canaux du flux porteur (11, 12) sont reliés à une entrée (10) commune et au moins les canaux du flux porteur (11, 12) sont dotés respectivement dans des sections partielles en étroit contact thermique de dispositifs de chauffage (5) réglables, qui sont placés de façon thermiquement isolée des autres ensembles, et une section du canal (111, 121) rétrécie par rapport à la section restante du canal du flux porteur étant attribuée aux canaux du flux porteur (11, 12) dans la zone des dispositifs de chauffage (5).

2. Commutateur de flux de fluide miniaturisé selon la revendication 1, **caractérisé en ce que** les canaux du flux porteur (11, 12) comprennent de façon symétrique le canal du flux d'échantillon (2) au moins dans la chambre de répartition (3).

3. Commutateur de flux de fluide miniaturisé selon la revendication 1, **caractérisé en ce qu'**une section d'écoulement identique est attribuée aux canaux du flux porteur (11, 12).

4. Commutateur de flux de fluide miniaturisé selon la revendication 1, **caractérisé en ce que** tous les canaux cités (11, 12, 2, 41, 42) et la chambre de répartition (3) sont introduits dans un substrat (S) commun et sont fermés par une tranche de silicium de recouvrement (D).

5. Commutateur de flux de fluide miniaturisé selon la revendication 1, **caractérisé en ce que**, en supplément des canaux du flux porteur (11, 12), les canaux d'évacuation sont dotés en contact thermique étroit de dispositifs de chauffage (5) réglables.

6. Commutateur de flux de fluide miniaturisé selon les revendications 1 et 5, **caractérisé en ce que** les dispositifs de chauffage (5) réglables sont formés par une résistance de chauffage à couche mince (51) et un capteur de température à couche mince (52).

7. Commutateur de flux de fluide miniaturisé selon la revendication 1, **caractérisé en ce que** les canaux du flux porteur (11, 12) et/ou les canaux d'évacuation (41, 42) sont pourvus de débitmètres (6).

8. Commutateur de flux de fluide miniaturisé selon la revendication 7, **caractérisé en ce que** les débitmètres sont formés par un dispositif de chauffage à couche mince pouvant être chauffé électriquement, auquel sont attribuées deux sondes de température de façon symétrique dans le sens d'écoulement du canal.

9. Commutateur de flux de fluide miniaturisé selon les revendications 6, 7, 8, **caractérisé en ce que** le dispositif de chauffage à couche mince et les sondes de température cités sont fabriqués par une technologie de revêtement homogène et un procédé de microstructuration homogène.

10. Commutateur de flux de fluide miniaturisé selon la revendication 1, **caractérisé en ce qu'**au canal du flux d'échantillon (2) est attribué au moins un détecteur (7) pour la détection de particules individuelles dans le flux d'échantillon, dont les signaux de sortie peuvent être amenés au moyen d'appareils appropriés de commande et de réglage aux dispositifs de chauffage (5) respectivement utilisés.

11. Commutateur de flux de fluide miniaturisé selon la revendication 1, **caractérisé en ce que** l'isolation thermique du dispositif de chauffage (5) réglable s'effectue par les autres ensembles à travers des évidements (A) introduits dans le substrat (S) des deux côtés des sections de canal (111, 121) rétrécies.
